# EUROPEAN PATENT APPLICATION

(11) **EP 2 113 707 A2**
(43) Date of publication of application: **04.11.2009**
(21) Application number: 09158005.0
(22) Date of filing: 16.04.2009
(51) Int. Cl.: F16L 33/207, F16L 35/00, F16L 39/02

(54) **Safety hose for the passage of fluids in general**

(30) Priority: 28.04.2008 IT MI20080776
(71) Applicant: Mazzo, Mauro, 23880 Casatenovo LC (IT)
(72) Inventor: Mazzo, Mauro, 23880 Casatenovo LC (IT)
(74) Representative: Modiano, Micaela Nadia

(57) **Abstract**

A safety hose (1) for the passage of fluids in general, comprising an inner tube (2) connected, at one end, to the inner port (3) of a first coupling (10) and, at the other end, to a connecting element (20), which can be introduced in an outer tube (30) that can be fastened, at one end, to the outer port (31) of the first coupling (10), a second coupling (40) being also provided, which can be mated with the connecting element (20) inserted within the inner tube (2), the outer tube (30), at the other end, being associable with the outer port (42) of the second coupling (40).

## Description

The present invention relates to a safety hose for the passage of fluids in general.

As is known, in many fields of application it is necessary to use safety hoses for the passage of fluids in general, such as for example in the case of water delivery hoses for electrical household appliances, hoses for the actuation liquid of brakes, hoses for underwater activities, and the like.

To provide a safety hose, typically an inner tube is provided which is connected to couplings at its ends and is accommodated within an outer tube which acts as a containment element if damage or breakage in the inner tube occurs.

Considering, merely by way of example, the case of water delivery hoses for electric household appliances, the safety hose for water delivery is provided by means of an inner tube, which is clamped hermetically at its ends to the couplings and is arranged within a corrugated outer tube, which is designed so that it can be shortened by compaction so as to allow fixing to the couplings of the inner tube first and then of the outer tube.

However, with this arrangement the corrugated tube is unable to withstand high pressure and its resistance is usually around 3 bars, and therefore it is necessary to provide, at the end of the safety hose, a valve which, if the presence of water occurs in the interspace between the inner tube and the outer tube, blocks the flow of water.

With this type of safety hoses, if the inner tube bursts, the corrugated outer tube in any case would be unable to withstand the pressure.

The solution to use an outer tube that is capable of withstanding the pressure is not currently feasible, since the outer tube, by not being compressible, does not offer the possibility to provide hermetic fastening on the couplings of the inner tube and of the outer tube.

The aim of the invention is to solve the problem described above, by providing a safety hose for the passage of fluids in general that is constituted by two tubes, an inner one and an outer one, both of which are capable of withstanding high pressure values, so that even if the inner tube fails completely the outer tube must be capable of withstanding the pressure values that are usually used.

Within this aim, an object of the invention is to provide a hose in which it is possible to automate the production cycle with a production sequence that is particularly simple.

Another object of the present invention is to provide a safety hose for the passage of fluids in general which, thanks to its particular constructive characteristics, is capable of giving the greatest assurances of reliability and safety in use.

Still another object of the present invention is to provide a safety hose for the passage of fluids in general that can be easily obtained starting from commonly commercially available elements and materials and is also competitive from a merely economical standpoint.

This aim, as well as these and other objects that will become better apparent hereinafter, are achieved by a safety hose for the passage of fluids in general, according to the invention, characterized in that it comprises an inner tube which is connected, at one end, to the inner port of a first coupling and, at the other end, to a connecting element, which can be introduced in an outer tube that can be fastened, at one end, to the outer port of said first coupling, a second coupling being also provided, which can be mated with said connecting element inserted within said inner tube, said outer tube, at the other end, being associable with the outer port of said second outer coupling.

Further characteristics and advantages of the present invention will become better apparent from the description of a preferred but not exclusive embodiment of a safety hose for the passage of fluids in general, illustrated by way of non-limiting example in the accompanying drawings, wherein:

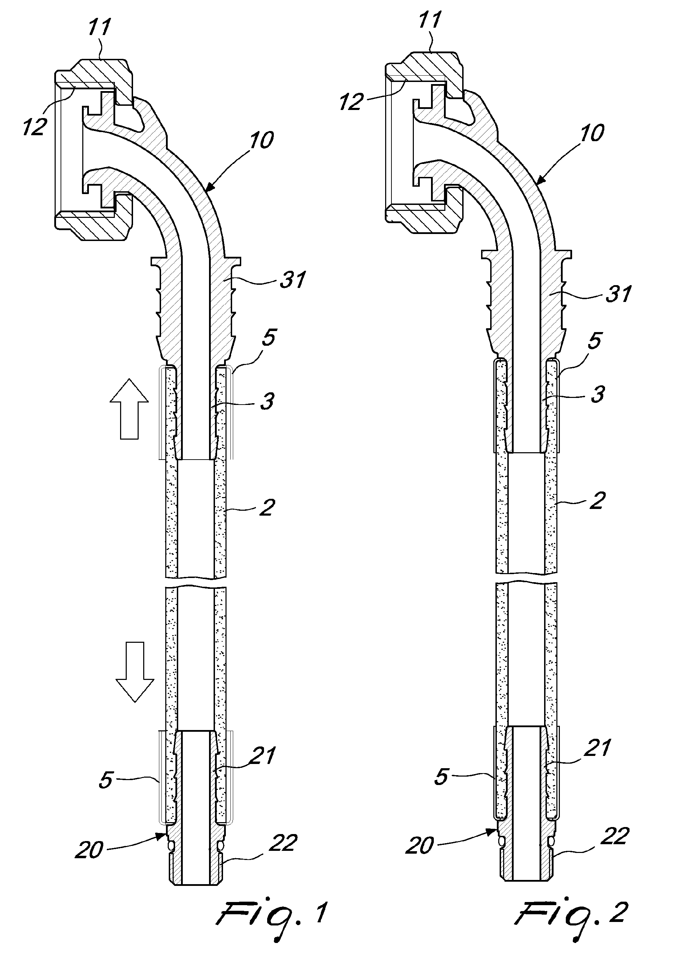

Figure 1 is a schematic sectional view of the step of connection of the inner tube to the first coupling and to the connecting element;
Figure 2 is a sectional view of the step of hermetic fastening of the ends of the inner tube;

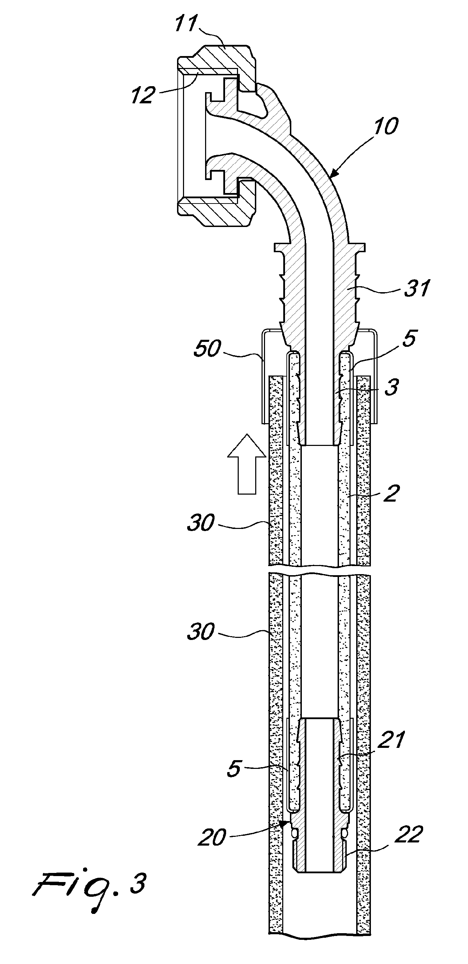

Figure 3 is a sectional view of the step of insertion of the inner tube in the outer tube;

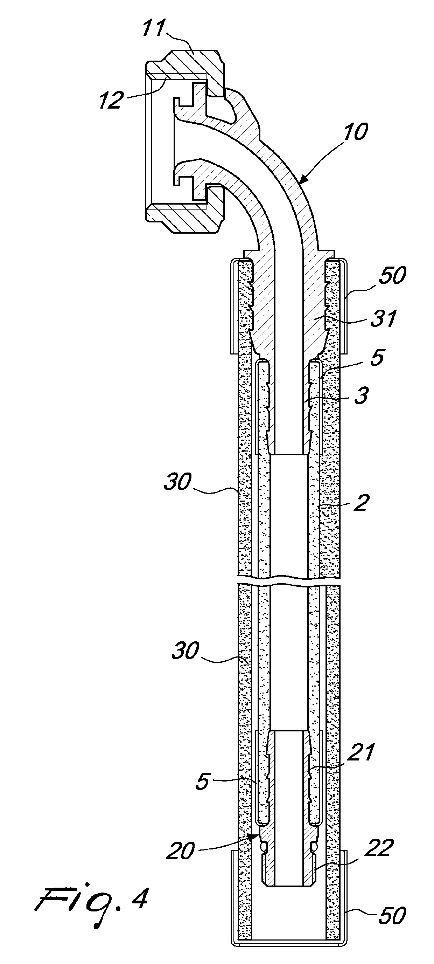

Figure 4 is a sectional view of the connection of the outer tube to the first coupling;

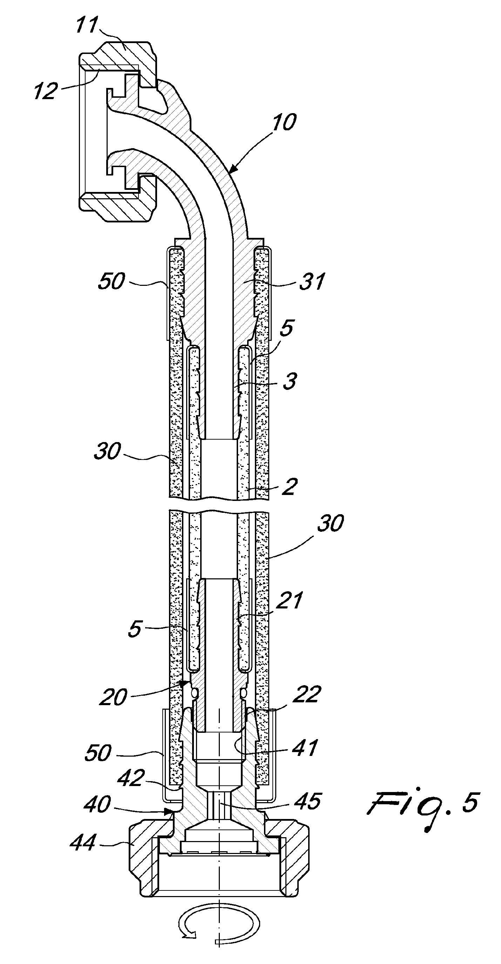

Figure 5 is a sectional view of the step of mating between the connecting element and the second coupling;

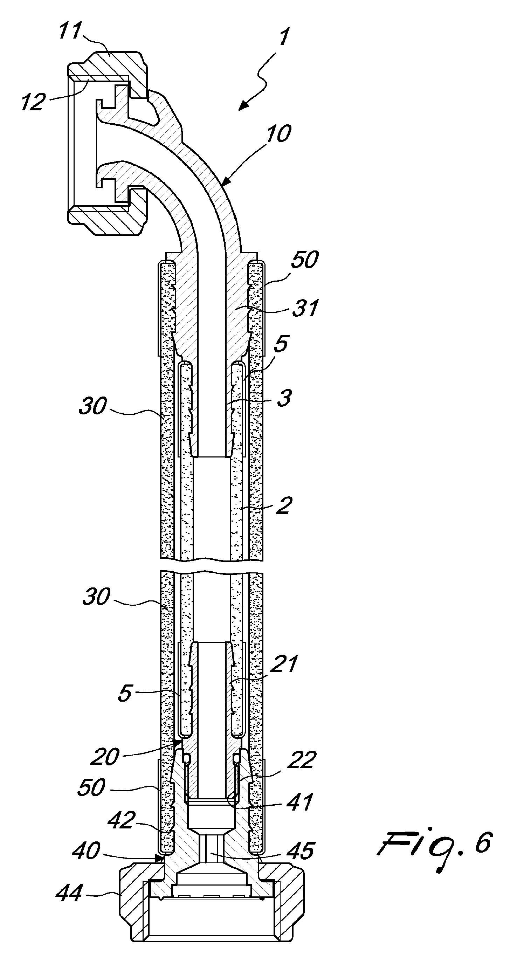

Figure 6 is a sectional view of the step of fastening the outer tube to the first and second couplings;

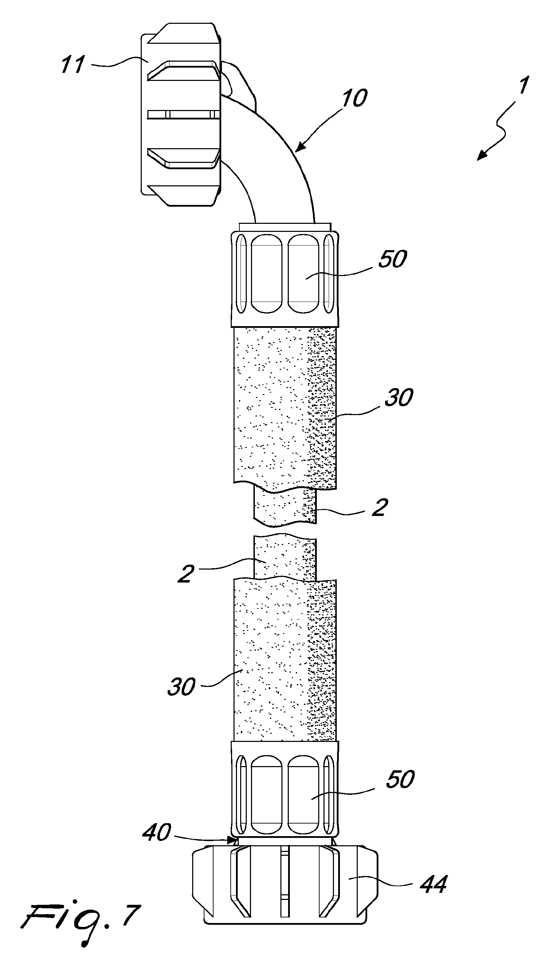

Figure 7 is a view of the safety hose according to the invention.

With reference to the figures, the safety hose for the passage of fluids in general according to the invention is generally designated by the reference numeral 1.

The safety hose can be used in several fields and in particular can be used as a water delivery hose for electrical household appliances, as a connecting hose for the brake circuit and as a delivery hose for compressed air, particularly connected to cylinders for scuba diving; of course, uses are possible in all fields in which it is necessary to be certain that the hose is capable of maintaining its characteristics and of withstanding the required pressures.

The hose 1 comprises an inner tube 2, which is connected, at one of its ends, to the inner port 3 of a first coupling, generally designated by the reference numeral 10 and provided, in the specific embodiment, as an elbow, but of course this embodiment must not be understood as binding in any way.

The first coupling 10 has a first ring 11 with a female thread 12 for connection to the circuit for the passage of the required fluid.

At the other end, the inner tube 2 is connected to a connecting element 20, which defines an inner port 21, which can be inserted in the hose, and a connecting part 22, which in the specific example is provided by a male thread but can be of any type, such as for example a bayonet coupling, a pressure-based fastening or any other solution that allows to provide a hermetic mating, as will become better apparent hereinafter.

In order to make the mating of the inner tube stable, the usual inner collars, designated by the reference numeral 5, are provided and are fastened onto the inner tube, so as to provide a hermetic mating between the ends of the hose and the ports 3 and 21.

Once the inner tube 2 has been prepared, as described above, the inner tube is inserted in an outer tube 30, which is sized so as to allow the passage of the connecting element 20.

The outer tube, at one of its ends, engages the outer port 31 defined on the coupling 10, while at the other end, once the inner tube 2 has been inserted completely in the outer tube 30, a second coupling 40 is applied which has an engagement portion 41 that mates with the connecting part 22. In the specific example, the engagement portion 41 is constituted by a female thread, which engages the male thread 22 that constitutes the connecting part, but of course, as already mentioned earlier, the type of connection can be any.

The second coupling 40 supports a second ring 44 and has an outer port 42, which during the step of mating with the inner tube practically enters the end of the outer tube: moreover, the outer port has a polygonal portion 45 for engagement with a rotation tool.

The second coupling 40 is provided with a ring 44 for connection to the desired circuit.

In order to make the seal stable, outer collars 50 are provided which are located at the ports 42 and 31 so as to provide hermetic fastening between the couplings and the outer tube.

It is important to stress that in the specific embodiment it is possible to provide the connection of the inner tube without having to compress the outer tube axially, as instead occurs in the background art, since the connection is provided in successive steps and in particular the inner tube is connected to a connecting element externally with respect to the outer tube and the connecting element is sized so that it can be subsequently introduced in the outer tube which is applied hermetically.

With the arrangement described above, it is possible to use, both for the inner tube and for the outer tube, tubes that can withstand high pressure values, since it is not necessary to compress the outer tube in order to shorten it, as instead occurs in the background art, and therefore it is possible to use single-layer or multilayer tubes with a reinforcement braid, coextruded tubes with a reinforcement braid, or in any case tubes which may even optionally be corrugated and allow to withstand high pressures.

In particular, by using coextruded tubes with a reinforcement braid it is possible to withstand pressure values higher than 30 bars.

From what has been described above it is evident that the safety hose according to the invention achieves the proposed aim and objects, and in particular the fact is stressed that by using, both for the inner tube and for the outer tube, two tubes that are capable of withstanding high pressure values, it is not necessary to provide the flow blocking valve, since the outer tube, even if the inner tube should fail, is capable of withstanding the pressure values that normally occur.

It should be added to the above that it is optionally possible to provide means that clearly indicate externally that the inner tube is leaking, by providing for example salts that change the color of the hose, or optionally it is possible to provide probes that indicate externally that the leak has occurred.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements.

The disclosures in Italian Patent Application no. MI2008A000776, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A safety hose (1) for the passage of fluids in general, **characterized in that** it comprises an inner tube (2) which is connected, at one end, to the inner port (3) of a first coupling (10) and, at the other end, to a connecting element (20), which can be introduced in an outer tube (30) that can be fastened, at one end, to the outer port (31) of said first coupling (10), a second coupling (40) being also provided, which can be mated with said connecting element (20) inserted within said inner tube (2), said outer tube (30), at the other end, being associable with the outer port (42) of said second coupling (40).

2. The safety hose according to claim 1, **characterized in that** said connecting element (20) defines an inner port (21), which can be inserted in said inner tube (2), and a connecting portion (22), which can be mated hermetically to said second coupling (40).

3. The safety hose according to claim 2, **characterized in that** said connecting portion (22) is constituted by a male thread, which can be mated with a corresponding female thread defined by said outer port (42) of said second coupling (40).

4. The safety hose according to one or more of the preceding claims, **characterized in that** said connecting portion (22) is of the bayonet type and can be mated in a corresponding bayonet coupling that is defined inside said outer port (42) of said second coupling (40).

5. The safety hose according to one or more of the preceding claims, **characterized in that** it comprises inner (5) and outer (50) collars that can be fastened onto said inner (3) and outer (31) ports of said first (10) and second (40) couplings.

6. The safety hose according to one or more of the preceding claims, **characterized in that** said inner tube (2) and said outer tube (30) are sized so as to withstand pressures of the fluid on the order of 30 bars.

7. The safety hose according to one or more of the preceding claims,
**characterized in that** said inner tube (2) and said outer tube (30) are adapted to withstand the same pressure value.

8. The safety hose according to one or more of the preceding claims, **characterized in that** said inner tube (2) and said outer tube (30) are provided by single-layer or multilayer tubes with reinforcement braid, by coextruded tubes with reinforcement braid, as well as by corrugated tubes adapted to withstand high pressures.

9. A method for providing a safety hose, **characterized in that** it comprises the steps of: mating hermetically an end of an inner tube (2) to the inner port (3) of a first coupling (10) and the other end of said inner tube (2) to a connecting element (20), inserting said inner tube (2) in an outer tube (30), introducing said connecting element (20), mating said connecting element (20) within an outer port (42) of a second coupling (40), and fastening hermetically said outer tube (30) on the outer couplings of said first (10) and second (42) couplings.
